# EUROPEAN PATENT SPECIFICATION

(11) **EP 3 383 650 B1**
(45) Date of publication and mention of the grant of the patent: **25.05.2022**
(21) Application number: 16828978.3
(22) Date of filing: 05.12.2016
(51) Int. Cl.: B32B 27/04, A47G 19/02, B32B 27/08

(54) **FOOD CONTACT ITEM AND METHOD FOR MANUFACTURING THEREOF**
LEBENSMITTELKONTAKTARTIKEL UND VERFAHREN ZUR HERSTELLUNG DAVON
ARTICLE DE CONTACT ALIMENTAIRE, ET PROCÉDÉ POUR SA FABRICATION

(30) Priority: 04.12.2015 IT UB20156238
(43) Date of publication of application: 10.10.2018
(73) Proprietor: Raimondo, Enrico, 36075 Montecchio Maggiore (VI) (IT)
(72) Inventor: RAIMONDO, Enrico, 36050 Sovizzo (VI) (IT)
(74) Representative: Autuori, Angelo
(86) International application number: PCT/IB2016/057359
(87) International publication number: WO 2017/093983

(56) References cited:
- EP-A2- 2 154 403
- WO-A1-2006/070267
- Anonymous: "DURALOID AL-30", Prochima , 10 January 2013 (2013-01-10), XP002760111, Retrieved from the Internet: URL:http://www.prochima.it/duraloid-al-30. html [retrieved on 2016-07-19]

## Description

### Field of the Invention

The present invention relates to a item having a food contact zone of composite material, as well as to a method for manufacturing such item.

### Definitions

As used herein, with the expression "fiber reinforcing laminar element" or derivative thereof of a composite material is meant a laminar element composed of a plurality of fibers, made of any natural or synthetic material, braided or woven to each other, susceptible to be embedded in a polymer matrix.

As used herein, with the expression "polymer matrix" or derivative thereof of a composite material is meant one or more polymeric materials susceptible to form the polymeric layers within which one or more fiber reinforcing laminar element are embedded.

As used herein, with the expression "transparent" or derivative thereof referred to material is meant the ability of such material to be passed through by light without being scattered.

As used herein, with the expression "translucent" or derivative thereof referred to material is meant the ability of such material to be passed through by light in a diffuse way.

As used herein, with the expression "translucent" or derivative thereof referred to material is meant the ability of such material to be passed through by light in a diffuse way.

As used herein, with the expression "food grade" or derivative thereof referred to material is meant the fact that such material meets the current legislation on food contact in a referred Country.

As used herein, with the expression "compatible materials" or derivative thereof materials are meant having chemical and/or physical compatibility to each other, that is materials which once coupled give rise to a junction adapted to support the transfer of tensile or shear stresses through the contact surface. Therefore, identical materials or in any case materials having the matrix with the same base have the maximum compatibility.

As used herein, with the expression "providing" or derivative thereof is meant the preparation of an element of interest to a process step of interest, thus including any preventive treatment act for the optimum exploiting of the same step of interest, from the simple withdrawal and possible storage to pre-heat and/or chemical and/or physical treatments and the like.

### Background of the Invention

Composite material items are known, generally composed of carbon fibers embedded in an epoxy matrix. These items are used in various fields, for example in construction, aviation, automotive, marine, medical or sports, due to the high mechanical properties and the recognized aesthetic appeal of the composite material.

However, due to the inherent inability of the composite material for food contact, such items are not usable for food contact.

In order to try to exploit the aesthetic appeal of the composite material also in this field, food material items, for example PET or aluminum cycling water bottles, coated with one or more layers of composite material have been provided. An example of such known bottles is described in the document WO2006/070267, which includes all the features of the preamble of independent claims 1 and 2.

It is clear that these items are difficult to manufacture, expensive and not very functional. Moreover, the composite material coating tends to delaminate over time, with the consequence that it becomes not only aesthetically unpleasing, but also dangerous for people handling the item.

Further, the weight of such items is very high, which makes them unsuitable for use in competitive sports.

The European patent application EP2154403 discloses a flexible hose.

### Summary of the invention

Object of the present invention is to at least partially overcome the above mentioned drawbacks, by providing a high functional and low cost composite material food contact item.

Further object is to provide a food contact composite material item having high durability.

A further object is to provide a food contact composite material item having a high aesthetic appeal.

A further object is to provide a lightweight food contact composite material item. Such objects, and others that will appear more clearly hereinafter, are fulfilled by a item and/or by a method according to what is herein described, claimed and / or shown.

Advantageous embodiments of the invention are defined in according to the dependent claims.

### Brief description of the drawings

Further features and advantages of the invention will become more apparent by reading the detailed description of some preferred but not exclusive embodiments of a composite material item **1**, shown as non-limiting example with the help of the annexed figures, wherein:
**FIGs. 1** and **2** are axonometric views of different embodiments of the item **1**;
**FIG. 3** is an enlarged sectional view of some particulars of a first embodiment of the item **1;**
**FIG. 4** is an enlarged sectional view of some particulars of a second embodiment of the item **1**.

### Detailed description of some preferred embodiments

With reference to the annexed figures, it is described an item **1** suitable for food contact. In particular, the item **1** may have any shape or configuration, and may be susceptible to fully or partially contact foodstuff.

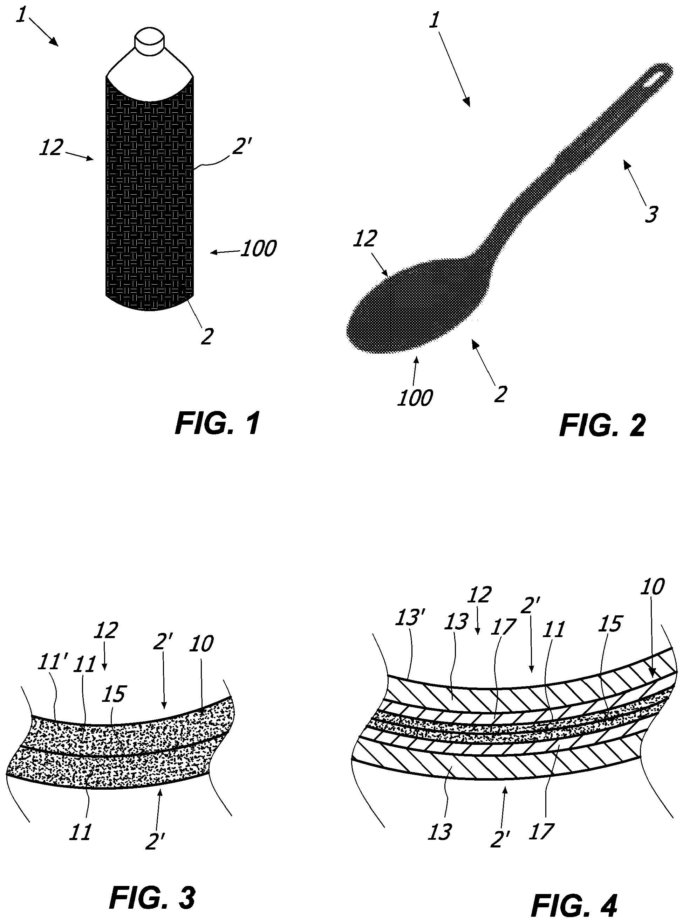

As non-limiting example, the item **1** may be cutlery, such as a fork, a knife or a spoon, as shown in FIG. 2, or a container, such as a glass, a bowl, a tray or a water bottle, as shown in FIG. 1.

On the other hand, the item **1** may be tongs for manipulating foodstuff, both manually and through a robot in an industrial line.

In particular, the item **1** may comprise a support structure **100** with at least one zone **2** made of composite material susceptible to contact foodstuff. More in detail, the zone **2** may comprise a food contact surface **2'** susceptible to contact foodstuff.

In case, for example, that the item **1** is a spoon, as shown in FIG. 2, the latter may have a concave portion defining the zone **2** made of composite material and a remaining zone **3,** defining the handle, made of any material, for example the same composite material or a polymeric material or metal material.

According to a different embodiment, the whole support structure **100** or the whole item 1 may be made of composite material, as in the case of the water bottle in FIG.1.

The food contact composite material zone **2** may be composed by at least one fiber reinforcing element **15** embedded within a polymer matrix **10.**

The latter may include at least one base layer **11** made of a first thermosetting polymer material, for example an epoxy resin.

Suitably, the polymer matrix **10** may comprise a contact surface **12** which may be made of a food grade material which may define the food surface **2'** of the zone **2.**

In particular, according to a first embodiment shown in FIG. 3, the contact surface **12** may be the outer surface **11'** of the base layer **11.**

In such case, the first thermosetting polymer material may be a food grade material. Moreover, said first thermosetting polymer material may suitably be transparent or translucent.

In this way, it is possible to see the reinforcing elements **15** through the polymer matrix **10.** This gives to the zone **2,** and more in general to the item **1,** a pleasant aspect.

The fiber laminar reinforcing element **15** may comprise one or more synthetic fibers and/or natural fibers. For example, said fibers may be chosen among the group consisting of carbon, glass, aramid, flax, hemp, cotton, basalt and similar fibers. Preferably, the reinforcing element may consist of carbon fibers.

The reinforcing carbon fibers **15** are embedded in the polymer matrix **10,** and in particular in the layer **11** thereof, in a known way.

In particular, the fibers may be interwoven, so that the reinforcing elements **15** may have a substantially laminar development.

Suitably, the reinforcing element **15** may be completely embedded within the base layer **11** of the polymer matrix **10,** so that no fiber leaks out of the same base layer **11.**

In another embodiment, shown in FIG.4, the item **1** may also comprise at least one cover layer **13** coupled with the base layer **11.**

In particular, the cover layer **13** and the base layer **11** may be reciprocally coupled, so that no portion of the base layer **11** may contact the foodstuff.

In such case, the outer surface **13'** of the cover layer **13** may define a contact surface **12** of the polymer matrix **10** or, similarly, the food contact surface **2'** of the zone **2.**

In such case, the base layer **11** may have the same features cited above, but it is not necessarily a food grade material. For example, said resin may be DT120 resin by Deltatech^{®}, or IMP503 resin by Impregnatex^{®}, or ET443/ET443 resin by C.I.T.^{®}, or MTM28 resin by Cytec^{®}, or a comparable similar resin.

Suitably, the cover layer **13** may be made of a food grade polymer material compatible with the first polymeric material, for example the epoxy resin Duraloid AL-30^{®} by Prochima^{®} or Fusion HR^{®} resin by Withford^{®}.

More in detail, such food grade material may have properties such as to remain unaltered also after the exposure to temperatures in the order of 60 °C - 70 °C. In other words, the item **1** may contact other foodstuff having a temperature comprised between -20 °C and 70 °C remaining substantially unaltered.

The food grade material may also be flexible, shock resistant and scratch resistant.

The food grade material may also keep unchanged its outer aspect during time, for example, also after several washing cycles in a dishwasher. Said food grade material may therefore resist attacks of acid and/or basic agents, for example washing detergent.

The food grade material is suitable for writing and/or screen-printing upon and/or being varnished.

The cover layer **13** may also have a particularly reduced thickness, for example a thickness lower than 0,5 mm, preferably comprised between 0,2 mm and 0,5 mm.

Possibly also the material of the base layer **11** may be susceptible to be written and/or screen-printed and/or varnished. In such case, the cover layer **13** may protect the surface **11'** of the base layer **11** in order to protect the prints, the paint works and/or the screen prints.

Suitably, also the cover layer **13** may be transparent or translucent so that the reinforcing element **15** may be seen by the user through the layers **11** and **13.**

In such way, the item **1** may have a pleasant aspect.

The material of the cover layer **13** may also be compatible with the polymeric material of the base layer **11,** for example it may be epoxy based too, so that the base layer **11** and the cover layer **13** may reciprocally adhere in a stable way.

As described above, the reinforcing element **15** may be completely embedded in the base layer **11** so that no portion thereof contacts the cover layer **13,** so as to avoid weaken the coupling of the latter with the base layer **11.**

As a possibility, the polymer matrix **10** may also include a polymeric layer **17** in order to promote the mutual adherence of the materials respectively of the base layer **11** and of the protective layer **13.**

In particular, such polymeric layer **17** may be a *primer* agent, for example HP100N by Marbocote^{®}, ISOMOLD by Finco^{®}, MPP712EZ by Chem-Trend^{®}, DURALOID 7001 by Prochima^{®}.

Thanks to the above described features, the mutual adherence of the base layer **11** and of the cover layer **13** may be particularly so stable to give to the item **1** a uniform aspect.

Suitably, the zone **2** made of composite material may exclusively consist of one or more reinforcing elements **15** and by one or more layers of epoxy resin. In particular, in contrast with, for example, to what taught in document WO2006/070267, thermoplastic materials are not coupled with the zone made of composite material.

It is also described a method for manufacturing an item **1,** in particular the zone susceptible to contact foodstuff **2.**

In general, a semifinished product made of composite material may be provided comprising the fiber reinforcing laminar element **15** embedded within the base layer **11.**

Subsequently, a second polymeric food grade material may be provided and may be applied on an application surface for realizing the cover layer **13,** for example through a roll, brush or casting. After the application, there is a curing phase of said second polymeric food grade material so that is assumes a glassy appearance.

Said curing phase may be done in ambient air, in such case about 24 hours are necessary for the complete curing, or in oven, for example at 90°C - 100°C, in such case about 20-40 minutes are necessary.

Depending on whether the zone **2** comprises or not the *primer* layer **17,** the application surface may be the surface of the latter or the surface of the base layer **11.**

The semi-finished product made of composite material may be taken already finished from a storage site or manufactured *in situ,* for example by putting in a suitably shaped mould one or more laminar reinforcing elements **15** preimpregnated with the first thermosetting polymeric material and curing the latter at suitable work temperature and work time.

During the curing, the epoxy resin of the first polymeric material and/or of the second polymeric material polymerize, thus hardening and assuming a glassy appearance.

On the other hand, the one or more reinforcing laminar elements **15** may be nonpreimpregnated, and the first polymeric material may be injected directly in the mould to impregnate the one or more reinforcing laminar elements **15.**

A release agent may be applied in the mould to facilitate the detachment of the semifinished product. In such case, the base layer **11** may contain a residual film of the release agent. Therefore, an appropriate phase is suitably required in which the residual film must be removed through water sandblasting at a pressure between 2 bar and 3 bar.

Such operation allows to remove the release agent film by preserving the integrity of the surface of the base element **10.**

Moreover, in an embodiment, before applying the second food grade polymeric material the application surface is machined, for example by sandpaper, so as to make it rough and thus facilitating the adherence of the second polymeric material.

The machining through sandpaper may make the semi-finished product opaque.

In particular, thanks to the above-mentioned features, the item made of composite material **1** is suitable for food contact by keeping a very pleasant aesthetical *appeal.* The item **1** is light, manageable and resistant, particularly suitable for competitive sport purposes.

The invention will be better understood in the light of the following example.

### Example

To manufacture a cup according to this invention, it is required to insert the following elements in a mould:
- 1 skin at +/-45° of carbon fiber-fabric-200gmq-T300;
- 1 skin at 0/90° of carbon fiber-fabric -2380gmq-T700;
- 1 skin at +/-45° of carbon fiber-fabric -200gmq-T300;
- 1 skin at +/-45° of carbon fiber-fabric -200gmq-T300.

All skins are pre-impregnated with transparent epoxy resin.

Then, a vacuum compaction is performed for 10 min at 60°, thereafter the mould is closed, it is placed under vacuum and the whole is treated in an autoclave for 2 hours at 135 °C, with a heating of 2 °C per minute and a next cooling of 3 °C per minute.

Once the semi-finished product is removed from the mould and burrs are trimmed, the internal surface is made opaque through a treatment with sandpaper and the resulting surface is cleaned through an epoxy diluent.

Once the surface has dried, it is therefore applied, inside the cup and through a brush, a layer of about 0.4 mm of food grade transparent epoxy resin, and the latter undergoes curing in ambient air for about 24 hours.

After the curing, the layer of food grade epoxy resin assumes a glassy appearance. It is possible to see the carbon skins both through the external surface and the internal one of the cup.

## Claims

1. A food contact item comprising a support structure (**100**) with at least one zone (**2**) made of a composite material having a food contact surface (**2'**) susceptible to contact a foodstuff, said at least one zone (**2**) comprising, respectively consisting of, at least one fiber reinforcing laminar element (**15**) embedded within a polymer matrix (**10**), the latter consisting of at least one base layer (**11**) made of a first polymeric thermosetting material, wherein said polymer matrix (**10**) is transparent or translucent so as to allow an user to see the at least one fiber reinforcing element (**15**) therethrough (**10**), the transparent polymer matrix (10) being able to be passed through by light without being scattered;
**characterized in that** said polymer matrix (**10**) comprises a contact surface (**12**) made of a food grade material to define said food contact surface (**2'**) of said at least one zone (**2**) made of composite material; and further
**characterized in that** said at least one base layer (**11**) includes an outer surface (**11'**), said first polymeric material being a transparent or translucent food grade epoxy resin, said outer surface (**11'**) of said at least one base layer (**11**) defining said contact surface (**12**) of said thermosetting polymer matrix (**10**).

2. A food contact item comprising a support structure (**100**) with at least one zone (**2**) made of a composite material having a food contact surface (**2'**) susceptible to contact a foodstuff, said at least one zone (**2**) comprising, respectively consisting of, at least one fiber reinforcing laminar element (**15**) embedded within a polymer matrix (**10**), the latter including at least one base layer (**11**) made of a first polymeric thermosetting material, wherein said polymer matrix (**10**) is transparent or translucent so as to allow an user to see the at least one fiber reinforcing element (**15**) therethrough (**10**), the transparent polymer matrix (10) being able to be passed through by light without being scattered;
**characterized in that** said polymer matrix (**10**) comprises a contact surface (**12**) made of a food grade material to define said food contact surface (**2'**) of said at least one zone (**2**) made of composite material; and further
**characterized in that** said polymer matrix (**10**) further comprises at least one cover layer (**13**) coupled with said at least one base layer (**11**), said at least one cover layer (**13**) including an outer surface (**13'**), said at least one cover layer (**13**) being made of a second food grade curable polymeric material compatible with said first polymeric material of said at least one base layer (**11**), said first polymeric material and said second polymeric material being both transparent or translucent, the outer surface (**13'**) of said at least one cover layer (**13**) defining said contact surface (**12**) of said thermosetting polymer matrix (**10**).

3. Item according to claim 2, wherein said first polymeric material is a first epoxy resin, said second polymeric material being a second food grade epoxy resin.

4. Item according to claim 2 or 3, wherein said matrix (**10**) further includes at least one layer (**17**) of a primer agent interposed between said at least one base layer (**11**) and said at least one cover layer (**13**), said agent being preferably an epoxy primer.

5. Item according to claim 2, 3 or 4, wherein said polymer matrix (**10**) consists of said at least one base layer (**11**) and of said at least one cover layer (**13**), respectively consists of said at least one base layer (**11**), said at least one layer (**17**) of a primer agent and said at least one cover layer (**13**).

6. Item according to any of claims 2 to 5, wherein said at least one cover layer (**13**) has a thickness of at least 0,2 mm.

7. Item according to claim 1 or any one of the claims 2 to 6, wherein said laminar reinforcing element (**15**) is completely embedded within the first polymeric material of said at least one base layer (**11**).

8. Item according to any one of the preceding claims when dependent from claim 1 or 2, wherein said laminar reinforcing element (**15**) comprises fibers selected among the group consisting of carbon fibers, glass fibers, aramid fibers, natural fibers or two or more thereof.

9. Item according to any one of the preceding claims when dependent from claim 1 or 2, wherein said zone (**2**) made of composite material consists exclusively of said at least one laminar reinforcing element (**15**) and at least one layer of epoxy polymeric material (**11, 13**, **17**).

10. Item according to any one of the preceding claims, wherein said zone (**2**) made of composite material is free of thermoplastic polymer material.

11. Item according to any one of the preceding claims, wherein said support structure (**100**) is totally made of composite material.

12. Item according to any one of the preceding claims, selected among the group consisting of a tray, a bottle, a water bottle, a cover, a kitchen utensil, a forceps to handling foodstuffs.

13. A method for manufacturing a food contact item according to claim 2 comprising a support structure with at least one zone (**2**) made of composite material having a food contact surface (**2'**) susceptible to contact a foodstuff, the method being **characterized by** including a step of manufacturing said at least one zone (**2**) made of composite material by the steps of:
- providing a semifinished product made of composite material comprising, respectively consisting of, at least one fiber reinforcing laminar element (**15**) embedded within at least one base layer (**11**) made of a first thermosetting polymeric material;
- providing a second polymeric curable food grade material compatible with said first thermosetting polymeric material;
- applying at least one cover layer (**13**) of said second polymeric food grade material on an application surface arranged above said at least one base layer (**11**) so as to obtain said food contact surface (**2'**) susceptible to contact a foodstuff;
wherein said first polymeric material and said second polymeric material are both transparent or translucent so as to allow an user to see the at least one fiber reinforcing element (**15**) through said at least one base layer (**11**) and said at least one cover layer (**13**).

14. Method according to the preceding claim, wherein said second polymeric material is a food grade epoxy resin, the method further comprising a step of curing said second polymeric material, so that it assumes a glassy appearance.

15. Method according to claim 13 or 14, further comprising a step of applying on said at least one base layer (**11**) at least one layer (**17**) of a primer agent to promote adhesion of said second polymeric material thereon, said at least one layer (**17**) of a primer agent including said application surface.

## Patentansprüche

1. Lebensmittelkontaktgegenstand, umfassend eine Stützstruktur (100) mit mindestens einer Zone (2) aus Verbundmaterial mit einer Lebensmittelkontaktfläche (2'), die für einen Kontakt mit einem Lebensmittel geeignet ist, wobei die mindestens eine Zone (2) umfasst bzw. besteht aus mindestens einem faserverstärkenden laminaren Element (15), das in eine Polymermatrix (10) eingebettet ist, wobei letztere aus mindestens einer Basisschicht (11) aus einem ersten polymeren duroplastischen Material besteht, wobei die Polymermatrix (10) transparent oder durchscheinend ist, um es einem Benutzer zu ermöglichen, das mindestens eine faserverstärkte Element (15) dadurch (10) zu sehen, wobei die transparente Polymermatrix (10) ohne Streuung von Licht durchdringbar ist;
**dadurch gekennzeichnet, dass** die Polymermatrix (10) eine Kontaktfläche (12) aus lebensmittelechtem Material umfasst, um die Lebensmittelkontaktfläche (2') der mindestens einen Zone (2) aus Verbundmaterial zu definieren; und weiterhin
**dadurch gekennzeichnet, dass** die mindestens eine Basisschicht (11) eine äußere Oberfläche (11') umfasst, wobei das erste Polymermaterial ein transparentes oder durchscheinendes Epoxidharz in Lebensmittelqualität ist, wobei die äußere Oberfläche (11') der mindestens einen Basisschicht (11) die Kontaktfläche (12) der duroplastischen Polymermatrix (10) definiert.

2. Lebensmittelkontaktgegenstand, umfassend eine Stützstruktur (100) mit mindestens einer Zone (2) aus Verbundmaterial mit einer Lebensmittelkontaktfläche (2'), die für einen Kontakt mit einem Lebensmittel geeignet ist, wobei die mindestens eine Zone (2) umfasst bzw. besteht aus mindestens einem faserverstärkenden laminaren Element (15), das in eine Polymermatrix (10) eingebettet ist, wobei letztere mindestens eine Basisschicht (11) aus einem ersten polymeren duroplastischen Material umfasst, wobei die Polymermatrix (10) transparent oder durchscheinend ist, um es einem Benutzer zu ermöglichen, das mindestens eine faserverstärkte Element (15) dadurch (10) zu sehen, wobei die transparente Polymermatrix (10) ohne Streuung von Licht durchdringbar ist;
**dadurch gekennzeichnet, dass** die Polymermatrix (10) eine Kontaktfläche (12) aus lebensmittelechtem Material umfasst, um die Lebensmittelkontaktfläche (2') der mindestens einen Zone (2) aus Verbundmaterial zu definieren; und weiterhin
**dadurch gekennzeichnet, dass** die Polymermatrix (10) ferner mindestens eine Deckschicht (13) umfasst, die mit der mindestens einen Basisschicht (11) gekoppelt ist, wobei die mindestens eine Deckschicht (13) eine äußere Oberfläche (13') umfasst, wobei die mindestens eine Deckschicht (13) aus einem zweiten Polymermaterial in Lebensmittelqualität hergestellt ist, das mit dem ersten Polymermaterial der mindestens einen Basisschicht (11) kompatibel ist, wobei das erste Polymermaterial und das zweite Polymermaterial beide transparent oder durchscheinend sind, wobei die äußere Oberfläche (13') der mindestens einen Deckschicht (13) die Kontaktfläche (12) der duroplastischen Polymermatrix (10) definiert.

3. Gegenstand nach Anspruch 2, wobei das erste Polymermaterial ein erstes Epoxidharz ist und das zweite Polymermaterial ein zweites Epoxidharz mit Lebensmittelqualität ist.

4. Gegenstand nach Anspruch 2 oder Anspruch 3, wobei die Matrix (10) ferner mindestens eine Schicht (17) aus einem Haftvermittler umfasst, die zwischen der mindestens einen Basisschicht (11) und der mindestens einen Deckschicht (13) angeordnet ist, wobei der Haftvermittler vorzugsweise ein Epoxidprimer ist.

5. Gegenstand nach Anspruch 2, 3, oder 4, wobei die Polymermatrix (10) aus der mindestens einen Basisschicht (11) und der mindestens einen Deckschicht (13) besteht oder aus der mindestens einen Basisschicht (11), der mindestens einen Schicht (17) des Haftvermittlers und der mindestens einen Deckschicht (13) besteht.

6. Gegenstand nach einem der Ansprüche 2 bis 5, wobei die mindestens eine Deckschicht (13) eine Dicke von mindestens 0,2 mm hat.

7. Gegenstand nach Anspruch 1 oder einem der Ansprüche 2 bis 6, wobei das laminare Verstärkungselement (15) vollständig in dem ersten Polymermaterial der mindestens einen Basisschicht (11) eingebettet ist.

8. Gegenstand nach einem der vorangehenden Ansprüche in Abhängigkeit von Anspruch 1 oder 2, wobei das laminare Verstärkungselement (15) Fasern umfasst, die aus der Gruppe bestehend aus Kohlefasern, Glasfasern, Aramidfasern, Naturfasern oder zwei oder mehr davon ausgewählt sind.

9. Gegenstand nach einem der vorangehenden Ansprüche in Abhängigkeit von Anspruch 1 oder 2, wobei die Zone (2) aus Verbundmaterial ausschließlich aus dem mindestens einen laminaren Verstärkungselement (15) und mindestens einer Schicht aus Epoxypolymermaterial (11, 13, 17) besteht.

10. Gegenstand nach einem der vorangehenden Ansprüche, wobei die Zone (2) aus Verbundmaterial frei von thermoplastischem Polymermaterial ist.

11. Gegenstand nach einem der vorangehenden Ansprüche, wobei die Stützstruktur (100) vollständig aus Verbundmaterial hergestellt ist.

12. Gegenstand nach einem der vorangehenden Ansprüche, ausgewählt aus der Gruppe bestehend aus einem Tablett, einer Flasche, einer Wasserflasche, einem Deckel, einem Küchengerät, einer Zange zum Handhaben von Lebensmitteln.

13. Verfahren zur Herstellung eines Lebensmittelkontaktgegenstands nach Anspruch 2, umfassend eine Stützstruktur mit mindestens einer Zone (2) aus Verbundmaterial mit einer Lebensmittelkontaktoberfläche (2'), die für einen Kontakt mit einem Lebensmittel geeignet ist, wobei das Verfahren **gekennzeichnet ist durch** Umfassen eines Schritts zur Herstellung der mindestens einen Zone (2) aus Verbundmaterial durch die Schritte:
- Bereitstellen eines Halbzeugs aus Verbundmaterial, umfassend bzw. bestehend aus mindestens einem faserverstärkenden laminaren Element (15), das in mindestens eine Basisschicht (11) aus einem ersten duroplastischen Polymermaterial eingebettet ist;
- Bereitstellen eines zweiten lebensmitteltauglichen Polymermaterials, das mit dem ersten duroplastischen Polymermaterial kompatibel ist;
- Aufbringen mindestens einer Deckschicht (13) des zweiten lebensmittelgeeigneten Polymermaterials auf eine Auftragungsoberfläche, die über der mindestens einen Basisschicht (11) angeordnet ist, um die Lebensmittelkontaktoberfläche (2') zu erhalten, die für den Kontakt mit einem Lebensmittel geeignet ist;
wobei das erste Polymermaterial und das zweite Polymermaterial beide transparent oder durchscheinend sind, um es einem Benutzer zu ermöglichen, das mindestens eine faserverstärkte Element (15) durch die mindestens eine Basisschicht (11) und die mindestens eine Deckschicht zu sehen (13).

14. Verfahren nach dem vorherigen Anspruch, wobei das zweite Polymermaterial ein Epoxidharz von Lebensmittelqualität ist, wobei das Verfahren ferner einen Schritt des Aushärtens des zweiten Polymermaterials umfasst, so dass es ein glasartiges Aussehen annimmt.

15. Verfahren nach Anspruch 13 oder 14, ferner umfassend einen Schritt des Aufbringens mindestens einer Schicht (17) eines Haftvermittlers auf die mindestens eine Basisschicht (11), um die Haftung des zweiten Polymermaterials darauf zu fördern, wobei die mindestens eine Schicht (17) des Haftvermittlers die Auftragungsoberfläche umfasst.

## Revendications

1. Elément de contact alimentaire comprenant une structure de support (100) comportant au moins une zone (2) en matériau composite comportant une surface de contact alimentaire (2') adaptée pour entrer en contact avec un produit alimentaire, ladite au moins une zone (2) comprenant, respectivement étant constituée de, au moins un élément lamellaire à fibres de renforcement (15) intégré dans une matrice polymère (10), cette dernière étant constituée d'au moins une couche de base (11) en un premier matériau thermodurcissable polymère, dans lequel ladite matrice polymère (10) est transparente ou translucide de manière à permettre à un utilisateur de voir l'au moins un élément à fibres de renforcement (15) à travers (10), la matrice polymère transparente (10) étant adaptée pour être traversée par la lumière sans la diffracter ;
**caractérisé en ce que** ladite matrice polymère (10) comprend une surface de contact (12) en un matériau de qualité alimentaire pour définir ladite surface de contact alimentaire (2') de ladite au moins une zone (2) en matériau composite ; et en outre
**caractérisé en ce que** ladite au moins une couche de base (11) comprend une surface externe (11'), ledit premier matériau polymère étant une résine époxy de qualité alimentaire translucide ou transparente, ladite surface externe (11') de ladite au moins une couche de base (11) définissant ladite surface de contact (12) de ladite matrice polymère thermodurcissable (10).

2. Elément de contact alimentaire comprenant une structure de support (100) comportant au moins une zone (2) en matériau composite comportant une surface de contact alimentaire (2') adaptée pour entrer en contact avec un produit alimentaire, ladite au moins une zone (2) comprenant, respectivement étant constituée de, au moins un élément lamellaire à fibres de renforcement (15) intégré dans une matrice polymère (10), cette dernière comprenant au moins une couche de base (11) en un premier matériau thermodurcissable polymère, dans lequel ladite matrice polymère (10) est transparente ou translucide de manière à permettre à un utilisateur de voir l'au moins un élément à fibres de renforcement (15) à travers (10), la matrice polymère transparente (10) étant adaptée pour être traversée par la lumière sans la diffracter ;
**caractérisé en ce que** ladite matrice polymère (10) comprend une surface de contact (12) en un matériau de qualité alimentaire pour définir ladite surface de contact alimentaire (2') de ladite au moins une zone (2) en matériau composite ; et en outre
**caractérisé en ce que** ladite matrice polymère (10) comprend en outre au moins une couche de revêtement (13) couplée à ladite au moins une couche de base (11), ladite au moins une couche de revêtement (13) comprenant une surface externe (13'), ladite au moins une couche de revêtement (13) étant en un deuxième matériau polymère durcissable de qualité alimentaire compatible avec ledit premier matériau polymère de ladite au moins une couche de base (11), ledit premier matériau polymère et ledit deuxième matériau polymère étant tous deux transparents ou translucides, la surface externe (13') de ladite au moins une couche de revêtement (13) définissant ladite surface de contact (12) de ladite matrice polymère thermodurcissable (10).

3. Elément selon la revendication 2, dans lequel ledit premier matériau polymère est une première résine époxy, ledit deuxième matériau polymère étant une deuxième résine époxy de qualité alimentaire.

4. Elément selon la revendication 2 ou 3, dans lequel ladite matrice (10) comprend en outre au moins une couche (17) d'un agent d'apprêt interposé entre ladite au moins une couche de base (11) et ladite au moins une couche de revêtement (13), ledit agent étant de préférence un apprêt époxy.

5. Elément selon la revendication 2, 3 ou 4, dans lequel ladite matrice polymère (10) est constituée de ladite au moins une couche de base (11) et de ladite au moins une couche de revêtement (13), respectivement est constituée de ladite au moins une couche de base (11), de ladite au moins une couche (17) d'un agent d'apprêt et de ladite au moins une couche de revêtement (13).

6. Elément selon l'une quelconque des revendications 2 à 5, dans lequel ladite au moins une couche de revêtement (13) comporte une épaisseur d'au moins 0,2 mm.

7. Elément selon la revendication 1 ou l'une quelconque des revendications 2 à 6, dans lequel ledit élément de renforcement lamellaire (15) est complètement intégré dans le premier matériau polymère de ladite au moins une couche de base (11).

8. Elément selon l'une quelconque des revendications précédentes en combinaison avec la revendication 1 ou 2, dans lequel ledit élément de renforcement lamellaire (15) comprend des fibres sélectionnées parmi le groupe constitué des fibres de carbone, des fibres de verre, des fibres d'aramide, des fibres naturelles ou de deux ou plus de celles-ci.

9. Elément selon l'une quelconque des revendications précédentes en combinaison avec la revendication 1 ou 2, dans lequel ladite zone (2) en matériau composite est constituée exclusivement dudit au moins un élément de renforcement lamellaire (15) et d'au moins une couche de matériau polymère époxy (11, 13, 17).

10. Elément selon l'une quelconque des revendications précédentes, dans lequel ladite zone (2) en matériau composite est exempte de matériau polymère thermoplastique.

11. Elément selon l'une quelconque des revendications précédentes, dans lequel ladite structure de support (100) est entièrement réalisée en matériau composite.

12. Elément selon l'une quelconque des revendications précédentes, sélectionné parmi le groupe constitué d'un plateau, d'une bouteille, d'une bouteille d'eau, d'un couvercle, d'un ustensile de cuisine, d'une pince de manipulation de produits alimentaires.

13. Procédé de fabrication d'un élément de contact alimentaire selon la revendication 2 comprenant une structure de support comportant au moins une zone (2) en matériau composite comportant une surface de contact alimentaire (2') adaptée pour entrer en contact avec un produit alimentaire, le procédé étant **caractérisé en ce qu'il** comprend une étape de fabrication de ladite au moins une zone (2) en matériau composite par mise en œuvre des étapes consistant à :
- fournir un produit semi-fini en matériau composite comprenant, se respectivement étant constitué de, au moins un élément lamellaire à fibres de renforcement (15) intégré dans au moins une couche de base (11) en un premier matériau polymère thermodurcissable ;
- fournir un deuxième matériau de qualité alimentaire durcissable polymère compatible avec ledit premier matériau polymère thermodurcissable ;
- appliquer au moins une couche de revêtement (13) dudit deuxième matériau de qualité alimentaire polymère sur une surface d'application située au-dessus de ladite au moins une couche de base (11) de manière à obtenir ladite surface de contact alimentaire (2') adaptée pour entrer en contact avec un produit alimentaire ;
dans lequel ledit premier matériau polymère et ledit deuxième matériau polymère sont tous deux transparents ou translucides de manière à permettre à un utilisateur de voir l'au moins un élément à fibres de renforcement (15) à travers ladite au moins une couche de base (11) et ladite au moins une couche de revêtement (13).

14. Procédé selon la revendication précédente, dans lequel ledit deuxième matériau polymère est une résine époxy de qualité alimentaire, le procédé comprenant en outre une étape de durcissement dudit deuxième matériau polymère, de sorte qu'il adopte un aspect vitreux.

15. Procédé selon la revendication 13 ou 14, comprenant en outre une étape d'application, sur ladite au moins une couche de base (11), d'au moins une couche (17) d'un agent d'apprêt pour favoriser l'adhésion dudit deuxième matériau polymère sur celle-ci, ladite au moins une couche (17) d'un agent d'apprêt comportant ladite surface d'application.
